# EUROPEAN PATENT APPLICATION

(11) **EP 4 085 812 A1**
(43) Date of publication of application: **09.11.2022**
(21) Application number: 20909443.2
(22) Date of filing: 23.12.2020
(51) Int. Cl.: A47L 11/40, B25J 11/00, B25J 9/00, B25J 19/00, F16F 15/02

(54) **ROBOT CLEANER**

(30) Priority: 30.12.2019 US 201962954672 P; 14.12.2020 KR 20200174755
(71) Applicant: LG Electronics, Inc., Yeongdeungpo-gu Seoul 07336 (KR)
(72) Inventor: JANG, Jaewon, Seoul 08592 (KR); LEE, Minwoo, Seoul 08592 (KR); LEE, Yeongjae, Seoul 08592 (KR)
(74) Representative: Vossius & Partner Patentanwälte Rechtsanwälte mbB
(86) International application number: PCT/KR2020/019026
(87) International publication number: WO 2021/137522

(57) **Abstract**

A robot cleaner is proposed. The robot cleaner includes a body, a bumper unit coupled to a border of the body, and a first sensor disposed in the body and sensing movement of the bumper unit relative to the body. The bumper unit has a bumper able to move with respect to the body and a cam protruding at a predetermined angle from the bumper, and the cam has an inclined surface formed at a predetermined angle from the bumper. There is an effect that when the bumper moves with respect to the body, the bumper can be returned to the initial position.

## Description

### CROSS REFERENCE TO RELATED APPLICATION

The present application claims priority to U.S. Patent Application No. 62/954672, filed December 30, 2019, and Korean Patent Application No. 10-2020-0174755, filed December 14, 2020, the entire contents of which is incorporated herein for all purposes by this reference.

### BACKGROUND OF THE INVENTION

### Field of the Invention

The present disclosure relates to a robot cleaner and, more particularly, to a robot cleaner that can clean a floor while traveling by rotating a mop thereof and using friction between the mop and the floor.

### Description of the Related Art

Recently, robot cleaners that clean sections to be cleaned while traveling by themselves without a user operating them are developed with the development of industrial technology. Such robot cleaners have a sensor that can recognize areas to be cleaned and a mop that can clean the floor surfaces, and can travel while wiping the floor surfaces of the space recognized by the sensor with the mop.

Of such robot cleaners, there is a wet-type robot cleaner that can wipe a floor surface with a wet mop to effectively remove dirt strongly sticking to the floor surface. Such a wet-type robot cleaner has a water tank and is configured such that water in the water tank is supplied to a mop and the wet mop wipes a floor surface, thereby being able to effectively remove dust strongly sticking to the floor surface.

Such a wet-type robot cleaner may have a circular mop such that the mop can wipe a floor surface in contact with the floor surface while rotating. Further, such a wet-type robot cleaner may be configured to be able to travel in a specific direction using friction of a plurality of mops rotating in contact with a floor surface.

Since the larger the friction between a mop and a floor surface, the more the mop can strongly wipe the floor surface, so in this case, a robot cleaner can effectively clean a floor surface.

A robot cleaner equipped with a bumper and a shock sensor has been disclosed in Korean Patent No. 10-1712867.

According to the robot cleaner, a curved first elastic member and a seesaw type second elastic member are installed in a disc-shaped robot cleaner body and an arc-shaped bumper is disposed on the front of the robot cleaner body.

According to this configuration, the first elastic member absorbs shock applied to the front, the second elastic member absorbs diagonal shock, and the first elastic member and the second elastic member distribute shock thereof in cooperation with each other.

However, the robot cleaner has only the effect of absorbing shock using the restoring force of the first elastic member and the second elastic member and has a limit in terms of accurately guiding the bumper to the initial position.

Further, even if the position of the bumper is changed by repeated shock, etc., a user cannot recognize it, so there is a limit that misoperation may occur.

Further, when the robot cleaner approaches a surface to be cleaned (a floor surface) covered with a carpet, etc., the robot cleaner cannot recognize and avoid the surface, so there is a limit that cleaning may be stopped and the robot cleaner may break.

### SUMMARY OF THE INVENTION

The present disclosure has been made in an effort to solve to problems with existing robot cleaners described above and an objective of the present disclosure is to provide a robot cleaner that can return a bumper to the initial position when shock is applied to the bumper.

Another objective of the present disclosure is to provide a robot cleaner that can improve the durability of a bumper by distributing shock that is applied to the bumper.

Another objective of the present disclosure is to provide a robot cleaner that can check whether a bumper has been returned to the initial position after shock is applied to the bumper.

Another objective of the present disclosure is to provide a robot cleaner that can recognize and avoid a carpet, etc. when the robot cleaner approaches a floor covered with the carpet, etc.

In order to achieve the objectives of the present disclosure, a robot cleaner includes: a body having an internal space for accommodating a battery, a water tank, and a motor; a first rotary plate having a lower side to which a first mop facing a floor surface is coupled, the first rotary plate being rotatably disposed on a bottom surface of the body; a second rotary plate having a lower side to which a second mop facing the floor surface is coupled, the second rotary plate being rotatably disposed on the bottom surface of the body; a bumper unit coupled to a border of the body; and a first sensor disposed in the body and sensing movement of the bumper unit relative to the body.

The bumper unit may have a bumper able to move with respect to the body and a cam protruding at a predetermined angle from the bumper, and the cam may have an inclined surface formed at a predetermined angle from the bumper.

The inclined surface may be in contact with the first sensor and press the first sensor while moving with the bumper when the bumper moves with respect to the body.

The bumper unit may further have an elastic portion protruding from the bumper and elastically supporting the body.

The body may have a guide groove accommodating the elastic portion and supporting the elastic portion in contact with the elastic portion.

The guide groove may have: a first guide surface connected to the border of the body and inclined at a predetermined angle with respect to the border; and a second guide surface connected to the first guide surface and inclined at a predetermined angle with respect to the first guide surface.

The bumper unit may further have a stopper protruding from the bumper and limiting a movement range of the bumper.

The body may have a pole disposed on a bottom surface and passing through the stopper hole.

The stopper may have a pole hole accommodating the pole therein and limiting a movement range of the pole.

The robot cleaner may further include a plate spring disposed between the bumper and the body and applying a restoring force to the bumper when the bumper moves with respect to the body.

The plate spring may have: a plate spring body; a body coupling portion extending perpendicular to the ground from the plate spring body, and coupled to the body; and a bumper contact portion extending in parallel with the ground from the plate spring body and being in contact with the bumper.

The robot cleaner may further include a damper disposed between the bumper and the body and coming in contact the bumper when the bumper moves with respect to the body.

The robot cleaner may further include a damper disposed between the bumper and the body and coming in contact with the bumper when the bumper moves with respect to the body, in which the damper may be disposed between the plate spring body and the bumper.

The bumper unit may have a blocker protrusion protruding from a bottom surface of the bumper.

The bumper unit may further have a guide rib having a rising surface protruding at a predetermined angle from the bottom surface of the bumper.

The guide rib may have a passing surface connected to the rising surface and positioned closer to a floor surface than the blocker protrusion.

When friction is applied to the blocker protrusion, the bumper may move with respect to the body.

When friction is applied to the blocker protrusion, a rotational direction of the first rotary plate or the second rotary plate may be changed.

According to the robot cleaner according to the present disclosure described above, there is an effect that when the bumper moves with respect to the body, the bumper can be returned to the initial position by a guide structure.

Further, there is an effect that since the plate spring and the damper are disposed between the bumper and the body, shock applied to the bumper is distributed and the durability of the bumper can be improved.

Further, there is an effect that it is possible to check whether the bumper has been returned to the initial position on the basis of the relative position of the pole in the body and the bumper.

Further, there is an effect that since the blocker protrusion is formed on the bottom surface of the bumper, when the robot cleaner approaches a floor surface covered with a carpet, etc., friction is applied to the blocker protrusion and the bumper moves with respect to the body, whereby the robot cleaner can avoid the floor surface covered with a carpet, etc.

### BRIEF DESCRIPTION OF THE DRAWINGS

The above and other objectives, features and other advantages of the present invention will be more clearly understood from the following detailed description when taken in conjunction with the accompanying drawings, in which:
FIG. 1 is a perspective view of a robot cleaner according to an embodiment of the present disclosure;
FIG. 2 is a view showing the robot cleaner shown in FIG. 1 and some components separated from the robot cleaner;
FIG. 3 is a rear view of the robot cleaner shown in FIG. 1;
FIG. 4 is a view showing the robot cleaner shown in FIG. 3 and some components separated from the robot cleaner;
FIG. 5 is a bottom view of the robot cleaner according to an embodiment of the present disclosure;
FIG. 6 is an exploded perspective view of the robot cleaner;
FIG. 7 is a cross-sectional view schematically showing the robot cleaner according to an embodiment of the present disclosure and components thereof;
FIG. 8 is a perspective view showing the top surface of a lower body of the robot cleaner according to an embodiment of the present disclosure;
FIG. 9 is a top view of FIG. 8;
FIGS. 10 to 12 are perspective views showing a bumper unit of the robot cleaner according to an embodiment of the present disclosure;
FIG. 13 is an enlarged view of blocker protrusions and guide ribs shown in FIG. 11;
FIG. 14 is a bottom view showing a bumper unit of a robot cleaner according to another embodiment of the present disclosure;
FIG. 15 is a partial enlarged view of blocker protrusions and guide ribs of the robot cleaner according to another embodiment of the present disclosure;
FIG. 16 is a top view showing the state in which a bumper unit has been combined with a body in the robot cleaner according to an embodiment of the present disclosure;
FIG. 17 is a partial enlarged view showing a contact state a cam and a first sensor shown in FIG. 16;
FIG. 18 is a partial enlarged view showing a combined state of an elastic member and a guide groove shown in FIG. 16;
FIG. 19 is a partial enlarged view showing a stopper having a pole shown in FIG. 16;
FIG. 20 is a perspective view showing a plate spring of the robot cleaner according to an embodiment of the present disclosure; and
FIG. 21 is a view showing the state in which the plate spring and the damper have been combined with the lower body of the robot cleaner according to an embodiment of the present disclosure.

### DETAILED DESCRIPTION OF THE INVENTION

Hereinafter, exemplary embodiments of the present disclosure are described in detail with reference to the accompanying drawings.

The present disclosure may be modified in various ways and implemented by various exemplary embodiments, so that specific exemplary embodiments are shown in the drawings and will be described in detail herein. However, it is to be understood that the present disclosure is not limited to the specific exemplary embodiments, but includes all modifications, equivalents, and substitutions included in the spirit and the scope of the present disclosure.

Terms used in the present specification are used only to describe specific exemplary embodiments rather than limiting the present disclosure. Singular forms are intended to include plural forms unless the context clearly indicates otherwise.

Unless defined otherwise, it is to be understood that all the terms used in the specification including technical and scientific terms may have the same meaning as those that are understood by those who skilled in the art. It will be further understood that terms defined in dictionaries that are commonly used should be interpreted as having meanings that are consistent with their meanings in the context of the relevant art and will not be interpreted in an idealized or overly formal sense unless expressly so defined herein.

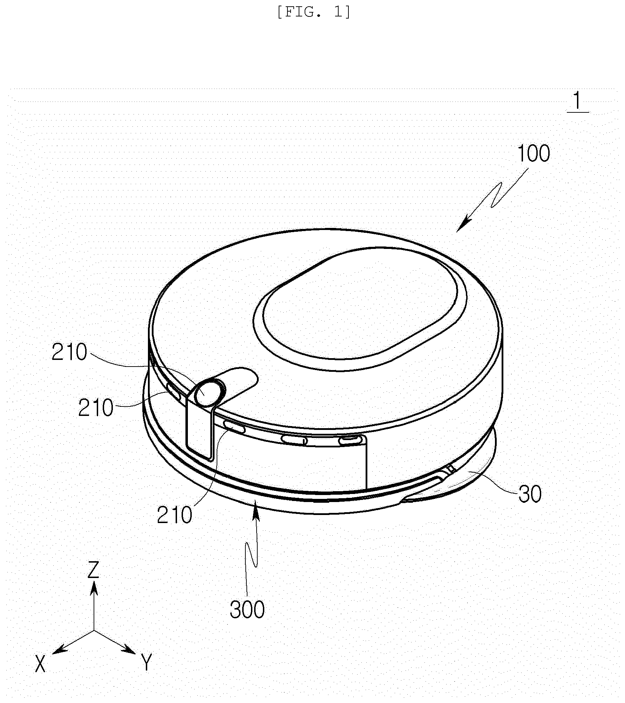

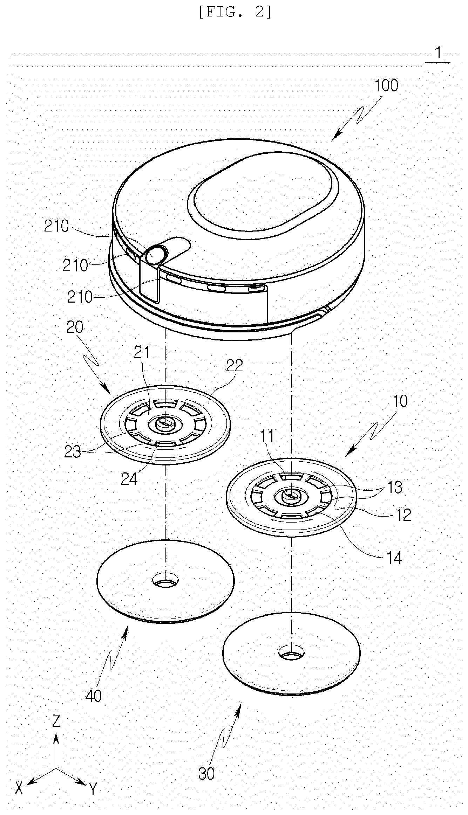

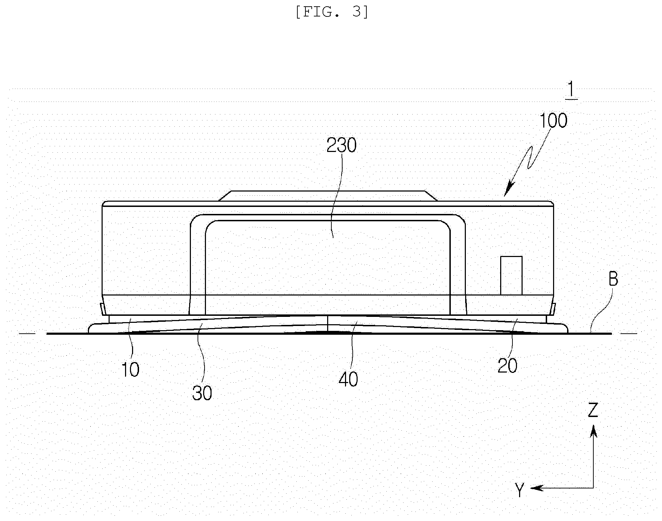

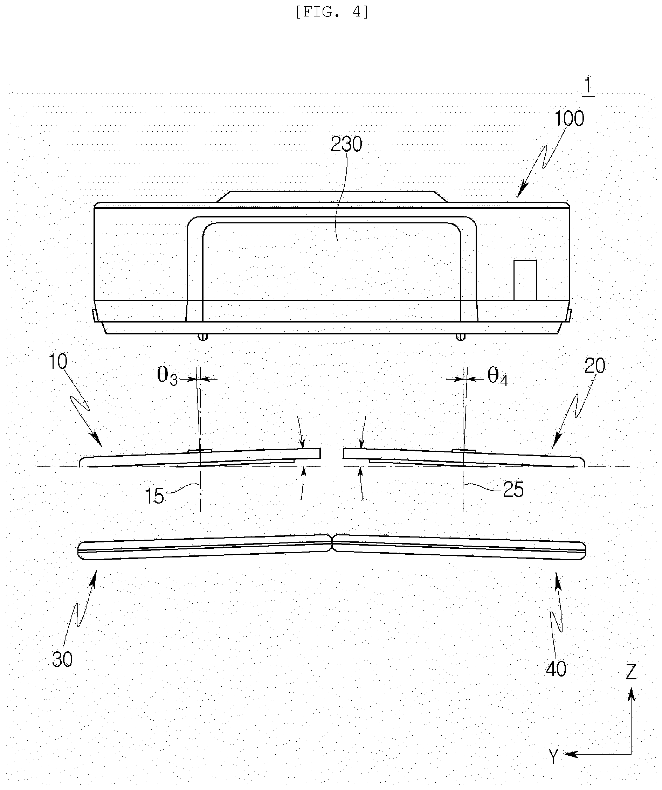

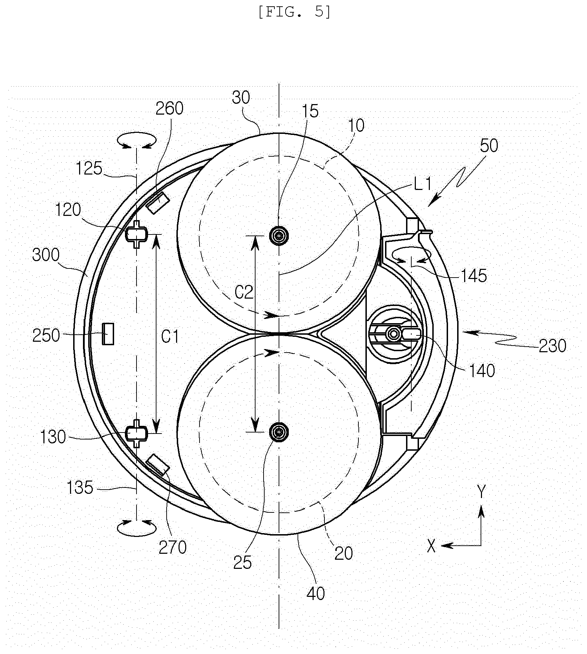

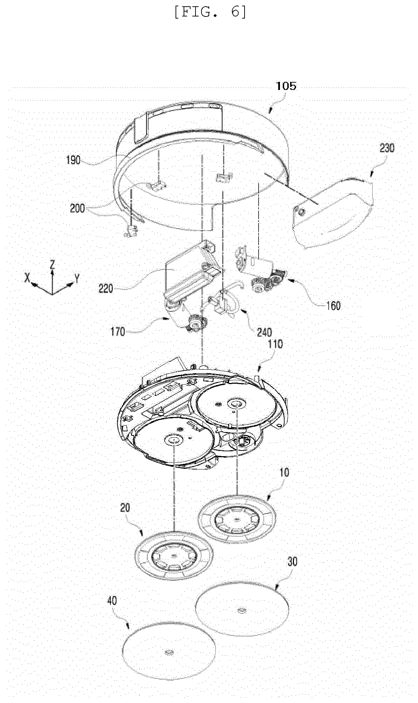

FIG. 1 is a perspective view of a robot cleaner 1 according to an embodiment of the present disclosure, FIG. 2 is a view showing the robot cleaner 1 shown in FIG. 1 and some components separated from the robot cleaner 1, FIG. 3 is a rear view of the robot cleaner 1 shown in FIG. 1, FIG. 4 is a view showing the robot cleaner 1 shown in FIG. 3 and some components separated from the robot cleaner 1, FIG. 5 is a bottom view of a robot cleaner 1 according to another embodiment of the present disclosure, and FIG. 6 is an exploded perspective view of the robot cleaner 1.

A robot cleaner 1 according to an embodiment of the present disclosure is configured to be placed on a floor and clean the floor while moving on the floor surface B. Accordingly, upward and downward directions are based on when the robot cleaner 1 is on a floor in the following description.

The direction from a first rotary plate 10 and a second rotary plate 20 to first and second support wheels 120 and 130 to be described below is defined as a forward direction.

'The lowermost portion' of components that is described in embodiments of the present disclosure may be the lowermost portion of the components or may be the portion closest to a floor when the robot cleaner 1 according to an embodiment of the present disclosure is used on the floor.

The robot cleaner 1 according to an embodiment of the present disclosure includes a body 100, rotary plates 10 and 20, and mops 30 and 40. The rotary plates 10 and 20 include a first rotary plate 10 and a second rotary plate 20, and the mops 30 and 40 include a first mop 30 and a second mop 40.

The body 100 may form the entire outer shape of the robot cleaner 1 or may be formed in a frame type. Components of the robot cleaner 1 may be combined with the body 100 and some components of the robot cleaner 1 may be disposed in the body 100.

In detail, the body 100 may be composed of a lower body 110 and an upper body 105 covering the lower body 110, and components of the robot cleaner 1 may be disposed in the space formed when the lower body 110 and the upper body 105 are combined. For example, a battery 220, a water tank 230, and motors 162 and 172 may be disposed in the internal space of the body 100 (see FIG. 6).

In an embodiment of the present disclosure, the body 100 may be formed such that the height in the up-down direction (parallel with Z-axis) is larger than the width in the horizontal direction (parallel with X-axis and Y-axis). The body 100 can provide a structure that helps the robot cleaner 1 have a stable structure and that enables the robot cleaner 1 to easily avoid obstacles when moving (traveling).

The body 100 may be formed in various shapes such as a circle, an ellipse, a rectangle, or the like, when seen from above or under.

The first mop 30 supposed to face a floor may be coupled to the lower side of the first rotary plate 10 and the first rotary plate 10 may be rotatably coupled to a bottom surface 112 of the lower body 110.

The first rotary plate 10 may be a flat plate or a flat frame that has a predetermined area. The first rotary plate 10 is usually laid down, so the horizontal width (or diameter) is sufficiently larger than the vertical height. The first rotary plate 10 combined with the body 100 may be placed in parallel with the floor surface B or at an angle with respect to the floor surface B.

The first rotary plate 10 may be a circular plate and the bottom surface of the first rotary plate 10 may have a substantially circular shape.

The entire first rotary plate 10 may have a rotational symmetric shape.

The first rotary plate 10 may have a first central plate 11, a first edge plate 12, and a first spoke 13.

The first central plate 11 forms the center of the first rotary plate 10 and is rotatably coupled to the body 100. The first central plate 11 may be coupled to the lower side of the body 100 such that the top surface thereof faces the bottom surface of the body 100.

The rotary shaft 15 of the first rotary plate 10 may be defined through the center of the first central plate 11. The rotary shaft 15 of the first rotary plate 10 may be defined perpendicular to the floor surface B or may be defined at a predetermined angle with respect to the direction perpendicular to the floor surface B.

The first edge plate 12 is formed at a predetermined distance from the first central plate 11 around the first central plate 11.

The first spoke 13 is provided as a several pieces that are continuously formed around the first central plate 11 to connect the first central plate 11 and the first edge plate 12. The first spokes 13 may be arranged with regular intervals and several holes 14 that are vertically open are formed between the first spokes 13, whereby liquid (e.g., water) discharged from a water supply tube 240 to be described below can be sent to the first mop 30 through the holes 14.

In the robot cleaner 1 according to an embodiment of the present disclosure, the bottom surface of the first rotary plate 10 combined with the body 100 may be inclined at a predetermined angle with respect to the floor surface B, and in this case, the rotary shaft 15 of the first rotary plate 10 may be inclined at a predetermined angle with respect to the direction perpendicular to the floor surface B.

In the robot cleaner 1 according to an embodiment of the present disclosure, the angle θ₁ between the bottom surface of the first rotary plate 10 and the floor surface B may be the same as the angle θ₃ between the rotary shaft 15 of the first rotary plate 10 and the axis perpendicular to the floor surface B. Accordingly, when the first rotary plate 10 is rotated with respect to the body 100, the bottom surface of the first rotary plate 10 can maintain the same angle with respect to the floor surface B.

The second mop 40 supposed to face the floor surface B may be coupled to the lower side of the second rotary plate 20 and the second rotary plate 20 may be rotatably coupled to the bottom surface 112 of the lower body 110.

The second rotary plate 20 may be a flat plate or a flat frame that has a predetermined area. The second rotary plate 20 is usually laid down, so the horizontal width (or diameter) is sufficiently larger than the vertical height. The second rotary plate 20 combined with the body 100 may be placed in parallel with the floor surface B or at an angle with respect to the floor surface B.

The second rotary plate 20 may be a circular plate and the bottom surface of the second rotary plate 20 may have a substantially circular shape.

The entire second rotary plate 20 may have a rotational symmetric shape.

The second rotary plate 20 may have a second central plate 21, a second edge plate 22, and a second spoke 23.

The second central plate 21 forms the center of the second rotary plate 20 and is rotatably coupled to the body 100. The second central plate 21 may be coupled to the lower side of the body 100 such that the top surface thereof faces the bottom surface of the body 100.

The rotary shaft 25 of the second rotary plate 20 may be defined through the center of the first central plate 21. The rotary shaft 25 of the second rotary plate 20 may be defined perpendicular to the floor surface B or may be defined at a predetermined angle with respect to the direction perpendicular to the floor surface B.

The second edge plate 22 is formed at a predetermined distance from the second central plate 21 around the second central plate 21.

The second spoke 23 is provided as a several pieces that are continuously formed around the second central plate 21 to connect the second central plate 21 and the second edge plate 22. The second spokes 23 may be arranged with regular intervals and several holes 24 that are vertically open are formed between the second spokes 23, whereby liquid (water) discharged from the water supply tube 240 to be described below can be sent to the second mop 40 through the holes 24.

In the robot cleaner 1 according to an embodiment of the present disclosure, the bottom surface of the second rotary plate 20 coupled to the body 100 may be inclined at a predetermined angle with respect to the floor surface B, and in this case, the rotary shaft 25 of the second rotary plate 20 may be inclined at a predetermined angle with respect to the direction perpendicular to the floor surface B.

In the robot cleaner 1 according to an embodiment of the present disclosure, the angle θ₂ between the bottom surface of the second rotary plate 20 and the floor surface B may be the same as the angle θ₄ between the rotary shaft 25 of the second rotary plate 20 and the axis perpendicular to the floor surface B. Accordingly, when the second rotary plate 20 is rotated with respect to the body 100, the bottom surface of the second rotary plate 20 can maintain the same angle with respect to the floor surface B.

In the robot cleaner 1 according to an embodiment of the present disclosure, the second rotary plate 20 may be configured to be the same as the first rotary plate 10 or may be configured symmetrically to the first rotary plate 10. Assuming that the first rotary plate 10 is positioned at the left side of the robot cleaner 1, the second rotary plate 20 may be positioned at the right side of the robot cleaner 1, in which the first rotary plate 10 and the second rotary plate 20 may symmetrically positioned at the left and right sides.

The first mop 30 may be formed such that the lower surface supposed to face the floor surface B has a predetermined area. The first mop 30 is flat. The first mop 30 has a shape of which the horizontal width (or diameter) is sufficiently larger than the vertical height. When the first mop 30 is coupled to the body 100, the lower surface of the first mop 30 may be in parallel with the floor surface B or may be inclined with respect to the floor surface B.

The lower surface of the first mop 30 may generally have a circular shape.

The entire first mop 30 may have a rotational symmetric shape.

The first mop 30 may be made of various materials that can wipe the floor surface B in contact with the floor surface B. To this end, the lower surface of the first mop 30 may be made of cloth made of textiles or fabrics, a nonwoven fabric, and/or a brush having a predetermined area.

In the robot cleaner 1 according to an embodiment of the present disclosure, the first mop 30 is detachably attached to the lower surface of the first rotary plate 10 to rotate with the first rotary plate 10 in this state. For example, the first mop 30 may be coupled in close contact with the bottom surface of the first edge plate 12, and may be coupled in close contact with the bottom surfaces of the first central plate 11 and the first edge plate 12.

The first mop 30 can be detachably attached to the first rotary plate 10 using various devices and methods. For example, the first mop 30 may be coupled to the first rotary plate 10 with at least a portion thereof hooked or fitted in the first rotary plate 10.

Alternatively, a specific member such as a clamp may be provided to combine the first mop 30 and the first rotary plate 10.

Alternatively, one of a pair of fasteners that are separably coupled to each other may be fixed at the first mop 30 and the other one may be fixed at the first rotary plate 10 (as a detailed example of the fasteners, a pair of magnets, a pair of Velcro tapes attached to each other, or a pair of buttons (female button and male button) fitted to each other may be used.

The first mop 30 may be coupled to the first rotary plate 10 such that the first mop 30 and the first rotary plate 10 overlap each other, or may be coupled to the first rotary plate 10 such that the center of the first mop 30 is aligned with the center of the first rotary plate 10.

The second mop 40 may be formed such that the lower surface supposed to face a floor has a predetermined area. The second mop 40 is flat. The second mop 40 has a shape of which the horizontal width (or diameter) is sufficiently larger than the vertical height. When the second mop 40 is coupled to the body 100, the bottom surface of the second mop 40 may be in parallel with the floor surface B or may be inclined with respect to the floor surface B.

The lower surface of the second mop 40 may generally have a circular shape.

The entire second mop 40 may have a rotational symmetric shape.

The second mop 40 may be made of various materials that can wipe the floor surface B in contact with the floor surface B. To this end, the lower surface of the second mop 40 may be made of cloth made of textiles or fabrics, a nonwoven fabric, and/or a brush having a predetermined area.

In the robot cleaner 1 according to an embodiment of the present disclosure, the second mop 40 is detachably attached to the lower surface of the second rotary plate 20 to rotate with the second rotary plate 20 in this state. The second mop 40 may be coupled in close contact with the lower surface of the second edge plat 22 or may be coupled in close contact with the lower surfaces of the second central plate 21 and the second edge plate 22.

The second mop 40 can be detachably attached to the second rotary plate 20 using various devices and methods. For example, the second mop 40 may be coupled to the second rotary plate 20 with at least a portion thereof hooked or fitted in the second rotary plate 20.

Alternatively, a specific member such as a clamp may be provided to combine the second mop 40 and the second rotary plate 20.

Alternatively, one of a pair of fasteners that are separably coupled to each other may be fixed at the second mop 40 and the other one may be fixed at the second rotary plate 20 (as a detailed example of the fasteners, a pair of magnets, a pair of Velcro tapes attached to each other, or a pair of buttons (female button and male button) fitted to each other may be used.

The second mop 40 may be coupled to the second rotary plate 20 such that the second mop 40 and the second rotary plate 20 overlap each other, or may be coupled to the second rotary plate 20 such that the center of the second mop 40 is aligned with the center of the second rotary plate 20.

The robot cleaner 1 according to an embodiment of the present disclosure may be configured to go straight on the floor surface B. For example, the robot cleaner 1 can go straight forward (X-axial direction) when cleaning or can go backward straight when needing to avoid an obstacle or a depression.

In the robot cleaner 1 according to an embodiment of the present disclosure, the first rotary plate 10 and the second rotary plate 20 may be inclined with respect to the floor surface B such that the sides close to each other are spaced part from the floor surface B further than the sides far from each other. That is, the first rotary plate 10 and the second rotary plate 20 may be disposed such that the sides far from the center of the robot cleaner 1 are closer to a floor than the sides close to the center of the robot cleaner (see FIGS. 3 and 4).

Further, the rotary shaft 15 of the first rotary plate 10 may be perpendicular to the lower surface of the first rotary plate 10 and the rotary shaft 25 of the second rotary plate 20 may be perpendicular to the lower surface of the second rotary plate 20.

When the first mop 30 is coupled to the first rotary plate 10 and the second mop 40 is coupled to the second rotary plate 20, the first mop 30 and the second mop 40 more strongly come in contact with a floor at the portions far from each other.

When the first rotary plate 10 is rotated, friction is generated between the lower surface of the first mop 30 and the floor surface B, and the generation point and direction of the friction are out of the rotary shaft 15 of the first rotary plate 10. Accordingly, the first rotary plate 10 can move with respect to the floor surface B and the robot cleaner 1 also can move on the floor surface B.

Further, when the second rotary plate 20 is rotated, friction is generated between the lower surface of the second mop 40 and the floor surface B, and the generation point and direction of the friction are out of the rotary shaft 25 of the second rotary plate 20. Accordingly, the second rotary plate 20 can move with respect to the floor surface B and the robot cleaner 1 also can move on the floor surface B.

When the first rotary plate 10 and the second rotary plate 20 are rotated at the same speed in the opposite directions, the robot cleaner 1 can move straight, that is, can go forward or backward. For example, if the first rotary plate 10 is rotated counterclockwise and the second rotary plate 20 is rotated clockwise when seen from above, the robot cleaner 1 can move forward.

When only one of the first rotary plate 10 and the second rotary plate 20 is rotated, the robot cleaner 1 can change the direction, that is, can turn.

When the rotation speed of the first rotary plate 10 and the rotation speed of the second rotary plate 20 are different or when the first rotary plate 10 and the second rotary plate 20 are rotated in the same direction, the robot cleaner 1 can move while turning, that is, can move along a curve.

The robot cleaner 1 according to an embodiment of the present disclosure includes a first support wheel 120, a second support wheel 130, and a first bottom sensor 250.

The first support wheel 120 and the second support wheel 130 may be configured to come in contact with a floor together with the first mop 30 and the second mop 40.

The first support wheel 120 and the second support wheel 130 are spaced apart from each other and may be formed like common wheels. The first support wheel 120 and the second support wheel 130 can move by rolling in contact with a floor, whereby the robot cleaner 1 can move on the floor surface B.

The first support wheel 120 may be coupled to the bottom surface of the body 100 at a point spaced apart from the first rotary plate 10 and the second rotary plate 20, and the second support wheel 130 may also be coupled to the bottom surface of the body 100 at a point spaced apart from the first rotary plate 10 and the second rotary plate 20.

Assuming a virtual connection line L connecting the center of the first rotary plate 10 and the center of the second rotary plate 20 horizontally (in a direction parallel with the floor surface B), the second support wheel 130 is positioned at the same side as the first support wheel 120 from the connection line L1. In this case, an assistant wheel 140 to be described below is positioned opposite to the first support wheel 120 with the connection line L1 therebetween.

The gap between the first support wheel 120 and the second support wheel 130 may be relatively large in consideration of the entire size of the robot cleaner 1. In more detail, the first support wheel 120 and the second support wheel 130 may be positioned with a gap such that the first support wheel 120 and the second support wheel 130 can prevent the robot cleaner 1 from falling sideways while supporting a portion of the weight of the robot cleaner when the first support wheel 120 and the second support wheel 130 are on the floor surface B (a rotational axis 125 of the first support wheel 120 and a rotational axis 135 of the second support wheel 130 are in parallel with the floor surface B).

The first support wheel 120 may be disposed ahead of the first rotary plate 10 and the second support wheel 130 may be disposed ahead of the second rotary plate 20.

In the robot cleaner 1 according to an embodiment of the present disclosure, the center of gravity is positioned closer to the first support wheel 120 and the second support wheel 130 than the first mop 30 and the second mop 40. Further, both the first mop 30 and the second mop 40 support the weight of the robot cleaner 1 more than the first support wheel 120 and the second support wheel 130.

The first bottom sensor 250 is disposed on the lower side of the body 100 to sense the relative position from the floor surface B. The first bottom sensor 250 may be implemented in various ways within a range in which the first bottom sensor 250 can sense the relative distance from the position thereof to the floor surface B.

When the relative distance from the floor surface B which is sensed by the first bottom sensor 250 (which may be the vertical distance from the floor surface or a distance in an inclined direction from the floor surface) exceeds a predetermined value or exceeds a predetermined range, it may be the case in which the floor surface suddenly lowers, and accordingly, the first bottom sensor 250 can sense a depression.

The first bottom sensor 250 may be an optical sensor, which may include a light emitting part that radiates light and a light receiving part that receives reflected light. The first bottom sensor 250 may be an infrared sensor.

The first bottom sensor 250 may be referred to as a cliff sensor.

The first bottom sensor 250 is disposed at the same side as the first support wheel 120 and the second support wheel 130 from the connection line L1.

The first bottom sensor 250 is positioned between the first support wheel 120 and the second support wheel 130 along the edge of the body 100. In the robot cleaner 1, if the first support wheel 120 is positioned relatively at the left side and the second support wheel 130 is positioned relatively at the right side, the first bottom sensor 250 is positioned substantially at the center.

The first bottom sensor 250 is disposed ahead of the support wheels 120 and 130.

In order to prevent the first bottom sensor 250 disposed on the lower surface of the body 100 from being interrupted by the first mop 30 and the second mop 40 when the first bottom sensor 250 senses a depression and in order to enable the first bottom sensor 250 to quickly sense a depression existing ahead of the robot cleaner, the first bottom sensor 250 may be disposed at a position sufficiently spaced apart from the first rotary plate 10 and the second rotary plate 20 (and sufficiently spaced apart from the first mop 30 and the second mop 40). Accordingly, the first bottom sensor 250 may be disposed close to the edge of the body 100.

The operation of the robot cleaner 1 according to an embodiment of the present disclosure may be controlled on the basis of the distance that is sensed by the first bottom sensor 250. In more detail, rotation of any one or more of the first rotary plate 10 and the second rotary plate 20 may be controlled on the basis of the distance that is sensed by the first bottom sensor 250. For example, when the distance sensed by the first bottom sensor 250 exceeds a predetermined value or is out of a predetermined range, the first rotary plate 10 and the second rotary plate 20 may stop rotating and the robot cleaner 1 may correspondingly stop or the first rotary plate 10 and/or the second rotary plate 20 may change the rotational direction and the robot cleaner 1 may change the movement direction.

In an embodiment of the present disclosure, the sensing direction of the first bottom sensor 250 may be inclined downward toward the edge of the body 100. For example, when the first bottom sensor 250 is an optical sensor, the light radiated from the first bottom sensor 250 may travel forward at an angle rather than perpendicularly to the floor surface B.

Accordingly, the first bottom sensor 250 can sense a depression existing ahead of the first bottom sensor 250 and can sense a depression exiting relatively ahead of the body 100, thereby being able to prevent the robot cleaner 1 from entering a depression.

The robot cleaner 1 according to an embodiment of the present disclosure can turn left or right and can move along a curve when cleaning, and in this case, the first mop 30, the second mop 40, the first support wheel 120, and the second support wheel 130 support the weight of the robot cleaner 1 in contact with a floor.

When the robot cleaner 1 turns left, the first bottom sensor 250 can sense a depression F before the first support wheel 120 and the second support wheel 130 enter the depression F, and the first bottom sensor 250 can sense the depression before at least the second support wheel 130 enters the depression F. When the first bottom sensor 250 senses the depression F, the weight of the robot cleaner 1 is supported by the first mop 30, the second mop 40, the first support wheel 120, and the second support wheel 130, and is supported by at least the first mop 30, the second mop 40, and the second support wheel 130.

When the robot cleaner 1 turns right, the first bottom sensor 250 can sense a depression F before the first support wheel 120 and the second support wheel 130 enter the depression F, and the first bottom sensor 250 can sense the depression before at least the first support wheel 120 enters the depression F. When the first bottom sensor 250 senses the depression F, the weight of the robot cleaner 1 is supported by the first mop 30, the second mop 40, the first support wheel 120, and the second support wheel 130, and is supported by at least the first mop 30, the second mop 40, and the first support wheel 120.

As described above, according to the robot cleaner 1 of an embodiment of the present disclosure, when the robot cleaner 1 not only goes straight, but also turns, it is possible to sense a depression F through the first bottom sensor before the first support wheel 120 and the second support wheel 130 enter the depression F, whereby it is possible to prevent the robot cleaner 1 from falling down into the depression F and to prevent the balance of the entire robot cleaner 1 from breaking.

The robot cleaner 1 according to an embodiment of the present disclosure includes a second bottom sensor 260 and a third bottom sensor 270.

The second bottom sensor 260 and the third bottom sensor 270 may be disposed at the same side as the first support wheel 120 and the second support wheel 130 from the connection line L1 on the lower side of the body 200 to sense the relative distance from the floor surface B.

The second bottom sensor 260 disposed on the lower surface of the body 100 is spaced apart from the first mop 30 and the second mop 40 not to be interrupted by the first mop 30 and the second mop 40 when sensing a depression F. In order to quickly sense a depression F existing at the left side or the right side of the robot cleaner 1, the second bottom sensor 260 may be disposed outside further than the first support wheel 120 or the second support wheel 130. The second bottom sensor 260 may be disposed close to the edge of the body 100.

The second bottom sensor 260 may be disposed opposite to the first bottom sensor 250 with the first support wheel 120 therebetween. Accordingly, a depression F at a side of the first support wheel 120 can be sensed by the first bottom sensor 250 and a depression F at the other side can be sensed by the second bottom sensor 260, whereby depressions F around the first support wheel 120 can be effectively sensed.

The third bottom sensor 270 disposed on the lower surface of the body 100 is spaced apart from the first mop 30 and the second mop 40 not to be interrupted by the first mop 30 and the second mop 40 when sensing a depression F. In order to quickly sense a depression F existing at the left side or the right side of the robot cleaner 1, the third bottom sensor 270 may be disposed outside further than the first support wheel 120 or the second support wheel 130. The third bottom sensor 270 may be disposed close to the edge of the body 100.

The third bottom sensor 270 may be disposed opposite to the first bottom sensor 250 with the second support wheel 130 therebetween. Accordingly, a depression F at a side of the second support wheel 130 can be sensed by the first bottom sensor 250 and a depression F at the other side can be sensed by the third bottom sensor 270, whereby depressions F around the first support wheel 130 can be effectively sensed.

The second bottom sensor 260 and the third bottom sensor 270 may be implemented in various ways within a range in which the second bottom sensor 260 and the third bottom sensor 270 can sense the relative distances from the floor surface B. The second bottom sensor 260 and the third bottom sensor 270 may have the same configuration as the first bottom sensor 250 except for the position where it is disposed.

The operation of the robot cleaner 1 according to an embodiment of the present disclosure may be controlled on the basis of the distance that is sensed by the second bottom sensor 260. In more detail, rotation of any one or more of the first rotary plate 10 and the second rotary plate 20 may be controlled on the basis of the distance that is sensed by the second bottom sensor 260. For example, when the distance sensed by the second bottom sensor 260 exceeds a predetermined value or is out of a predetermined range, the first rotary plate 10 and the second rotary plate 20 may stop rotating and the robot cleaner 1 may correspondingly stop or the first rotary plate 10 and/or the second rotary plate 20 may change the rotational direction and the robot cleaner 1 may change the movement direction.

The operation of the robot cleaner 1 according to an embodiment of the present disclosure may be controlled on the basis of the distance that is sensed by the third bottom sensor 270. In more detail, rotation of any one or more of the first rotary plate 10 and the second rotary plate 20 may be controlled on the basis of the distance that is sensed by the third bottom sensor 270. For example, when the distance sensed by the third bottom sensor 270 exceeds a predetermined value or is out of a predetermined range, the first rotary plate 10 and the second rotary plate 20 may stop rotating and the robot cleaner 1 may correspondingly stop or the first rotary plate 10 and/or the second rotary plate 20 may change the rotational direction and the robot cleaner 1 may change the movement direction.

The distance from the connection line L1 to the second bottom sensor 260 and the distance from the connection line L1 to the third bottom sensor 270 may be shorter than the distance from the connection line L1 to the first support wheel 120 and the distance from the connection line L1 to the second support wheel 130.

The second bottom sensor 260 and the third bottom sensor 270 are positioned outside the vertical area of a rectangle having the apexes at the center of the first rotary plate 10, the center of the second rotary plate 20, the center of the first support wheel 120, and the center of the second support wheel 130.

When the second bottom sensor 260 is disposed at the left side of the robot cleaner 1, the third bottom sensor 270 may be disposed at the right side of the robot cleaner 1.

The second bottom sensor 260 and the third bottom sensor 270 may be symmetric to each other.

The robot cleaner 1 according to an embodiment of the present disclosure can turn, and in this case, the first mop 30, the second mop 40, the first support wheel 120, and the second support wheel 130 support the weight of the robot cleaner 1 in contact with a floor.

When a depression F exists at the left side of the robot cleaner 1 and the robot cleaner 1 turns left, the second bottom sensor 260 can sense the depression F before the first support wheel 120 and the second support wheel 130 enter the depression F. When the second bottom sensor 260 senses the depression F, the weight of the robot cleaner 1 is supported by the first mop 30, the second mop 40, the first support wheel 120, and the second support wheel 130.

When a depression F exists at the right side of the robot cleaner 1 and the robot cleaner 1 turns right, the third bottom sensor 270 can sense the depression F before the first support wheel 120 and the second support wheel 130 enter the depression F. When the third bottom sensor 270 senses the depression F, the weight of the robot cleaner 1 is supported by the first mop 30, the second mop 40, the first support wheel 120, and the second support wheel 130.

As described above, according to the robot cleaner 1 of an embodiment of the present disclosure, it is possible to prevent the robot cleaner 1 from falling down into a depression F and to prevent the balance of the entire robot cleaner 1 from breaking when the robot cleaner 1 changes the direction or turns to any one side.

The robot cleaner 1 according to an embodiment of the present disclosure includes the assistant wheel 140 in addition to the first support wheel 120 and the second support wheel 130.

The assistant wheel 140 may be coupled to the lower side of the body 100 and spaced apart from the first rotary plate 10 and the second rotary plate 20.

The assistant wheel 140 is disposed the opposite side to the first support wheel 120 and the second support wheel 130 from the connection line L1.

In an embodiment of the present disclosure, the assistant wheel 140 may be a common wheel and the rotational axis 145 of the assistant wheel 140 may be in parallel with the floor surface B. The assistant wheel 140 can move by rolling in contact with a floor, whereby the robot cleaner 1 can move on the floor surface B.

However, in an embodiment of the present disclosure, the assistant wheel 140 does not come in contact with a floor when the first mop 30 and the second mop 40 come in contact with the floor.

The first support wheel 120 and the second dust wheel 130 are disposed at the front portion and the assistant wheel 140 is disposed at the rear portion with the first rotary plate 10 and the second rotary plate 20 therebetween.

In the robot cleaner 1 according to an embodiment of the present disclosure, the first rotary plate 10 and the second rotary plate 20 may be symmetrically disposed (left and right), and the first support wheel 120 and the second support wheel 140 may be symmetrically disposed (left and right).

According to the robot cleaner 1 of an embodiment of the present disclosure, when the first mop 30 is coupled to the first rotary plate 10 and the second mop 40 is coupled to the second rotary plate 20, the first support wheel 120, the second support wheel 130, and the assistant wheel 140 do not interfere with the first mop 30 and the second mop 40 in coming in contact with a floor.

Accordingly, the first mop 30 and the second mop 40 can come in contact with a floor, and wiping and cleaning can be achieved by rotation of the first mop 30 and the second mop 40. All the first support wheel 120, the second support wheel 130, and the assistant wheel 140 may be spaced from a floor, or the first support wheel 120 and the second support wheel 130 may come in contact with a floor with the assistant wheel 140 spaced from the floor.

In an embodiment, when the robot cleaner 1 is placed on a floor with the first mop 30 and the second mop 40 in contact with the floor, the height from the floor surface B to the lowermost portion of the first support wheel 120 and the height from the floor surface B to the lowermost portion of the second support wheel 130 are smaller than the height from the floor surface B to the lowermost portion of the assistant wheel 140.

The robot cleaner 1 according to an embodiment of the present disclosure includes a first actuator 160, a second actuator 170, a battery 220, a water tank 230, and a water supply tube 240.

The first actuator 160 is combined with the body 100 to rotate the first rotary plate 10.

The first actuator 160 may include a first casing , a first motor , and one or more first gears.

The first casing supports the components of the first actuator 160 and is fixed to the body 100.

The first motor may be an electric motor.

The first gears are rotated in mesh with each other, connect the first motor and the first rotary plate 10 to each other, and transmit the torque of the first motor to the first rotary plate 10. Accordingly, when the rotary shaft of the first motor is rotated, the first rotary plate 10 is rotated.

The second actuator 170 is combined with the body 100 to rotate the second rotary plate 20.

The second actuator 170 may include a second casing, a second motor, and one or more second gears.

The second casing 171 supports the components of the second actuator 170 and is fixed to the body 100.

The second motor 172 may be an electric motor.

The second gears 173 are rotated in mesh with each other, connect the second motor 172 and the second rotary plate 20 to each other, and transmit the torque of the second motor 172 to the second rotary plate 20. Accordingly, when the rotary shaft of the second motor 172 is rotated, the second rotary plate 20 is rotated.

As described above, in the robot cleaner 1 according to an embodiment of the present disclosure, the first rotary plate 10 and the first mop 30 can be rotated by the operation of the first actuator 160, and the second rotary plate 20 and the second mop 40 can be rotated by the operation of the second actuator 170.

In an embodiment of the present disclosure, the first actuator 160 may be disposed over the first rotary plate 10. According to this configuration, a loss of power that is transmitted to the first rotary plate 10 from the first actuator 160 can be minimized. Further, the weight of the first actuator 160 is applied to the first rotary plate 10, so the first mop 30 can wipe a floor while sufficiently rubbing against the floor.

Further, in an embodiment of the present disclosure, the second actuator 170 may be disposed over the second rotary plate 20. According to this configuration, a loss of power that is transmitted to the second rotary plate 20 from the second actuator 170 can be minimized. Further, the weight of the second actuator 170 is applied to the second rotary plate 20, so the second mop 40 can wipe a floor while sufficiently rubbing against the floor.

The second actuator 170 may be symmetric to the first actuator 160 (left and right).

The battery 220 is combined with the body 100 to supply power to other components of the robot cleaner 1. The battery 220 can supply power to the first actuator 160 and the second actuator 170, and particularly, supplies power to the first motor 162 and the second motor 172.

In an embodiment of the present disclosure, the battery 220 can be charged by an external power, and a charging terminal for charging the battery 220 may be disposed on a side of the body 100 or on the battery 220.

In the robot cleaner 1 according to an embodiment of the present disclosure, the battery 220 may be combined with the body 100.

The water tank 230 is a container having an internal space for keeping liquid such as water. The water tank 230 may be fixed to the body 100 or may be detachably coupled to the body 100.

In an embodiment of the present disclosure, the water tank 230 may be disposed over the assistant wheel 140.

The water supply tank 240 may be a tube or a pipe and is connected to the water tank 230 such that liquid in the water tank 230 can flow therethrough. The water supply tank 240 is disposed such that the opposite end connected to the water tank 230 is positioned over the first rotary plate 10 and the second rotary plat 230, so the liquid in the water tank 230 can be supplied to the first mop 30 and the second mop 40.

In the robot cleaner 1 according to an embodiment of the present disclosure, the water supply tube 240 may be one tube having two branches. The end of any one of the branches may be disposed over the first rotary plate 10 and the end of the other one branch may be disposed over the second rotary plate 20.

In the robot cleaner 1 according to an embodiment of the present disclosure, a separate pump may be provided to send liquid through the water supply tank 240.

The center of gravity of the robot cleaner 1 may be positioned in the vertical area of a rectangle having apexes at the center of the first rotary plate 10, the center of the second rotary plate 20, the center of the first support wheel 120, and the center of the second rotary wheel 130. Accordingly, the robot cleaner 1 is supported by the first mop 30, the second mop 40, the first support wheel 120, and the second support wheel 130.

In the robot cleaner 1 according to an embodiment of the present disclosure, the first actuator 160, the second actuator 170, the battery 220, and the water tank 230 each may be relatively a weight body in the robot cleaner 1. The first actuator 160 and the second actuator 170 are disposed on or close to the connection line, the battery 220 is disposed ahead of the connection line, and the water tank 230 is disposed behind the connection line, whereby the center of gravity of the entire robot cleaner 1 can be positioned at the center portion of the robot cleaner 1. Accordingly, the first mop 30 and the second mop 40 can stably come in contact with a floor.

Further, the first actuator 160, the second actuator 170, the battery 220, and the water tank 230 are disposed in different areas in a plan view, so the weights can be stably distributed and the body 100 and the robot cleaner 1 can be formed relatively flat. Further, the robot cleaner 1 can easily enter under a shelf, a table, or the like.

According to the robot cleaner 1 of an embodiment of the present disclosure, when the robot cleaner 1 is started to operate with the water tank 230 sufficiently filled with water, the weight can be distributed such that only the first mop 30 and the second mop 40 wipe a floor in contact with the floor. Even though the center of gravity of the robot cleaner 1 moves forward while the liquid in the water tank 230 is used, the first mop 30 and the second mop 50 can wipe the floor in contact with the floor together with the first support wheel 120 and the second support wheel 130.

According to the robot cleaner 1 of an embodiment of the present disclosure, regardless of whether the liquid in the water tank 230 is used up, cleaning can be performed with the first support wheel 120 and the second support wheel 130 are in contact with a floor together with the first mop 30 and the second mop 40.

In the robot cleaner 1 according to an embodiment of the present disclosure, the second bottoms sensor 260, the first support wheel 120, the first bottom sensor 250, the second support wheel 130, and the third bottom sensor 270 may be sequentially arranged along the edge of the body 100.

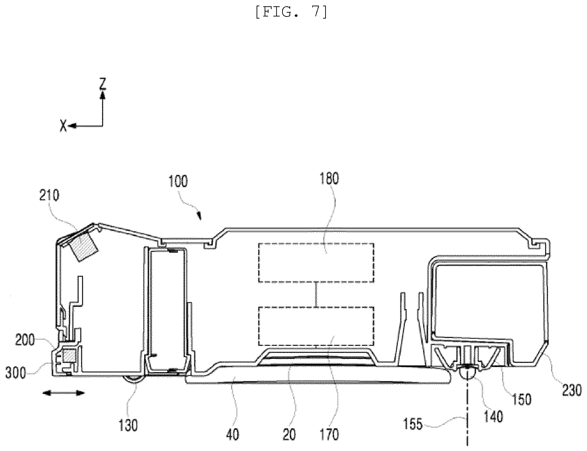

FIG. 7 is a cross-sectional view schematically showing the robot cleaner 1 according to another embodiment of the present disclosure and components thereof.

The robot cleaner 1 according to an embodiment of the present disclosure may include a controller 180, a bumper 190, a first sensor 200, and a second sensor 210.

The controller 180 can control the first actuator 160 and the second actuator 170 to operate on the basis of predetermined information or real-time information. A storage medium storing application programs may be disposed in the robot cleaner 1 for control of the controller 180. The controller 180 may control the robot cleaner 1 by executing the application programs on the basis of information input to the robot cleaner 1, information output from the robot cleaner 1, etc.

The bumper unit 300 is coupled to the edge of the body 100 and moves with respect to the body 100. For example, the bumper unit 300 may be combined with the body 100 to be able to reciprocate toward and away from the center of the body 100.

The bumper unit 300 may be coupled to a portion of the edge of the body 100 or may be coupled to the entire edge of the body 100.

In the cleaner according to an embodiment of the present disclosure, the lowermost portion of the body 100 at the same side as the bumper unit 300 from the connection line L1 may be higher than or at the same height as the lowermost portion of the bumper unit 300. That is, the bumper unit 300 may be positioned lower than or at the same height as the body 100. Accordingly, obstacles existing at relatively low positions can hit against the bumper unit 300 and can be sensed by the bumper unit 300.

The first sensor 200 may be combined with the body 100 to sense movement (relative movement) of the bumper unit 300 moving with respect to the body 100. The first sensor 200 may be a microswitch, a photo interrupter, or a tact switch.

When the bumper unit 300 of the robot cleaner 1 comes in contact with an obstacle, the controller 180 can control the robot cleaner 1 to avoid the obstacle and can control the operation of the first actuator 160 and/or the second actuator 170 on the basis of information from the first sensor 200.

For example, when the bumper unit 300 comes in contact with an obstacle while the robot cleaner 1 travels, the first sensor 200 can find out the contact position of the bumper unit 300 and the controller 180 can control the first actuator 160 and/or the second actuator 170 to operate so that the robot cleaner 1 can leave the contact position.

The controller 180 can control the robot cleaner 1 such that the robot cleaner 1 can travel in accordance with a pre-input traveling pattern.

For example, the robot cleaner 1 can travel straight forward or backward and can travel along a pre-input virtual line. The robot cleaner 1 can also reciprocate in a virtual area that is defined on the floor surface B.

The second sensor 210 may be combined with the body 100 to sense relative distances from obstacles. The second motor 210 may be a distance sensor.

When the distance between the robot cleaner 1 and an obstacle based on information from the second sensor 210 is a predetermined value or less, the controller 180 can control the operation of the first actuator 160 and/or the second actuator 170 such that the robot cleaner 1 changes the traveling direction or moves away from the obstacle.

The controller 180 can control the operation of the first actuator 160 and/or the second actuator 170 such that the robot cleaner 1 stops or changes the traveling direction, depending on the distances sensed by the first bottom sensor 250, the second bottom sensor 260, or the third bottom sensor 270.

The robot cleaner 1 according to an embodiment of the present disclosure can move (travel) using the friction between the first mop 30 and the floor surface B which is generated when the first rotary plate 10 is rotated and the friction between the second mop 40 and the floor surface B which is generated when the second rotary plate 20 is rotated.

In the robot cleaner 1 according to an embodiment of the present disclosure, the first support wheel 120 and the second support wheel 130 may be configured such that the friction on a floor does not interfere with movement (traveling) of the robot cleaner 1 and may be configured not to cause an increase in load when the robot cleaner 1 moves (travels).

To this end, the width of the first support wheel 120 and the width of the second support wheel 130 may be sufficiently small in comparison to the diameter of the first rotary plate 10 or the diameter of the second rotary plate 20.

According to this configuration, even though the robot cleaner 1 is driven with the first support wheel 120 and the second support wheel 130 in contact with a floor together with the first mop 30 and the second mop 40, the friction between the first support wheel 120 and the floor surface B and the friction between the second support wheel 130 and the floor surface B are very small in comparison to the friction between the first mop 30 and the floor surface B and the friction between the second mop 40 and the floor surface B, so an unnecessary loss of power is not generated and movement of the robot cleaner 1 is not interrupted.

The robot cleaner 1 according to an embodiment of the present disclosure can be stably supported at four points by the first support wheel 120, the second support wheel 130, the first mop 30, and the second mop 40.

In the robot cleaner 1 according to an embodiment of the present disclosure, the rotational axis 125 of the first support wheel 120 and the rotational axis 135 of the second support wheel 130 may be in parallel with the connection line L1. That is, the rotational axis 125 of the first support wheel 120 and the rotational axis 135 of the second support wheel 130 may be fixed (in the left-right direction) on the body 100.

The first support wheel 120 and the second support wheel 130 can come in contact with a floor together with the first mop 30 and the second mop 40, and in this case, the first mop 30 and the second mop 40 can be rotated at the same speed in opposite directions so that the robot cleaner 1 moves straight. Further, in this case, the first support wheel 120 and the second support wheel 130 assist the robot cleaner 1 moving straight forward and backward.

The robot cleaner 1 according to an embodiment of the present disclosure may include an assistant wheel body 150. The assistant wheel body 150 is rotatably coupled to the lower side of the body 100 and the assistant wheel 140 is rotatably coupled to the assistant wheel body 150.

That is, the assistant wheel 140 is coupled to the body 100 through the assistant wheel body 150.

The rotational axis 145 of the assistant wheel 140 and the rotary shaft 155 of the assistant wheel body 150 may cross each other. The rotational axis 145 of the assistant wheel 140 and the rotary shaft 155 of the assistant wheel body 150 may perpendicularly cross each other. For example, the rotary shaft 155 of the assistant wheel body 150 may be positioned in the vertical direction or may be slightly inclined from the vertical direction, and the rotational axis 145 of the assistant wheel 140 may be positioned in the horizontal direction.

According to the robot cleaner 1 of an embodiment of the present disclosure, when the robot cleaner 1 is not substantially used (when the first mop 30 and the second mop 40 are separated from the robot cleaner 1), the assistant wheel 140 is in contact with the floor surface B. When the robot cleaner 1 is moved in this state, the direction of assistant wheel 140 is freely changed by the assistant wheel body 150, so the robot cleaner 1 can be easily moved.

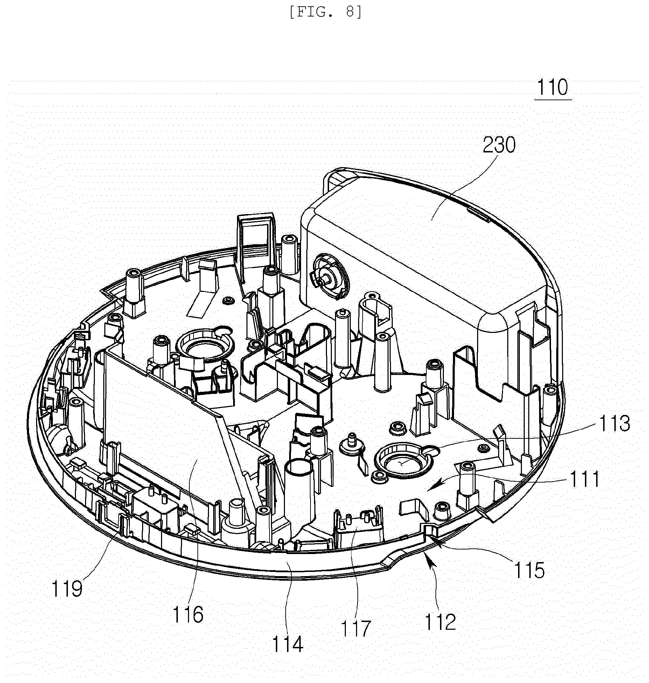

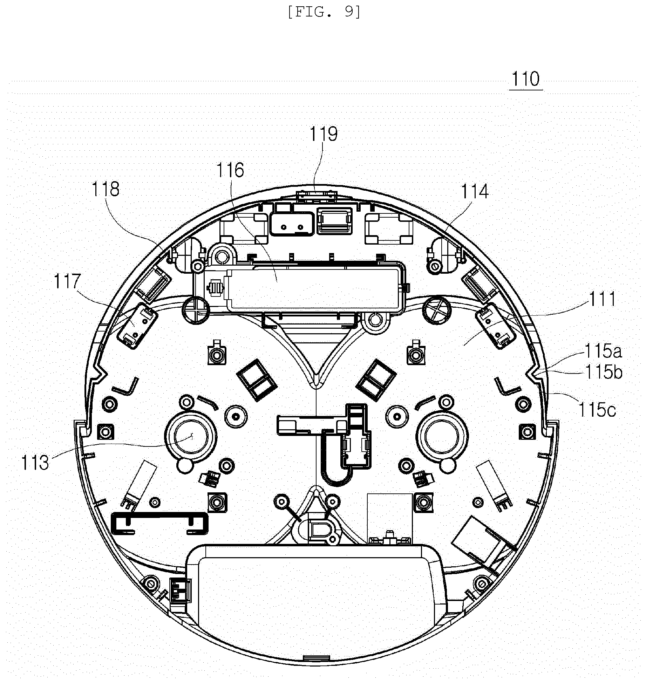

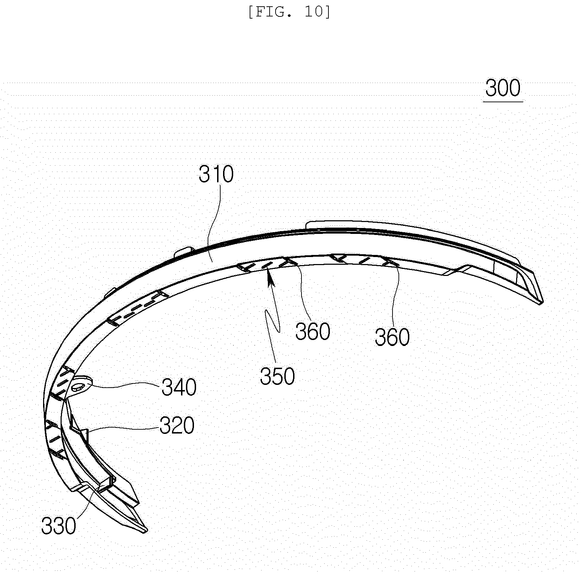

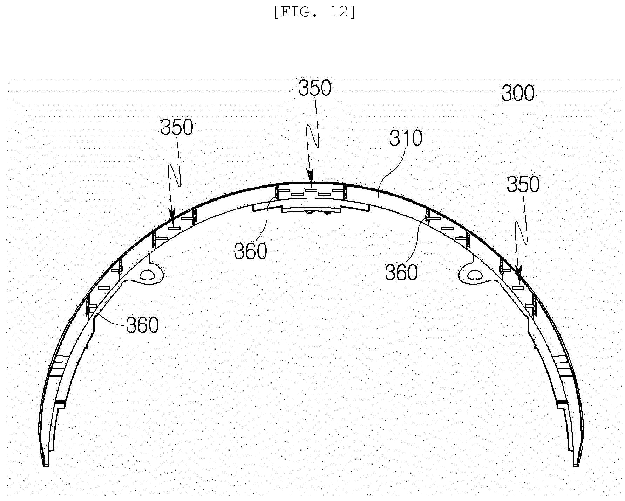

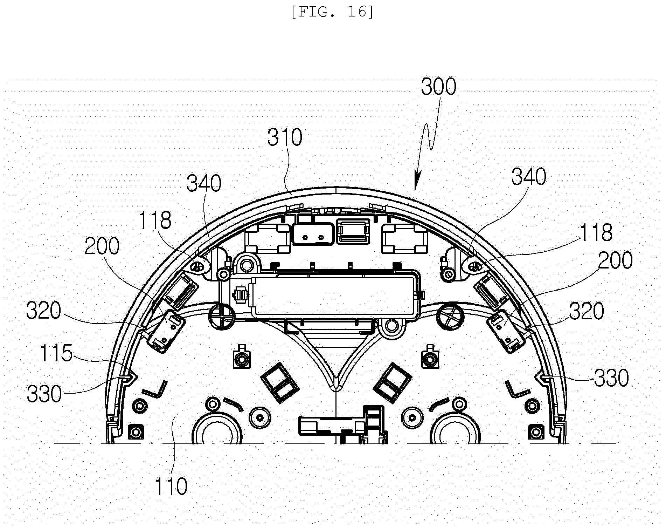

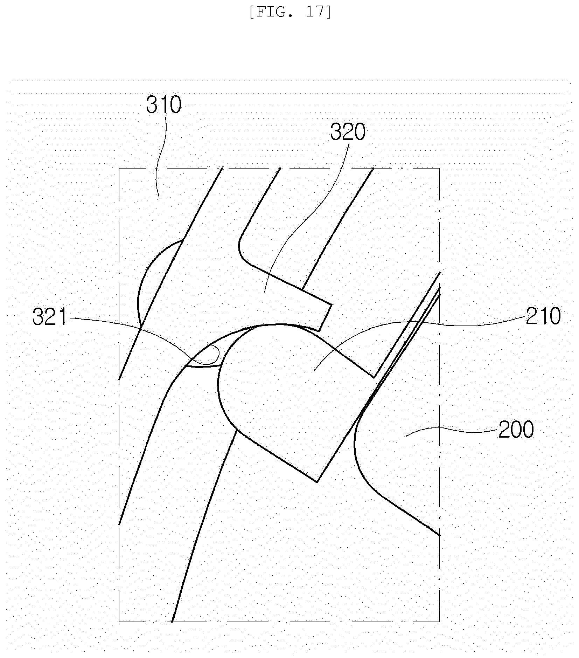

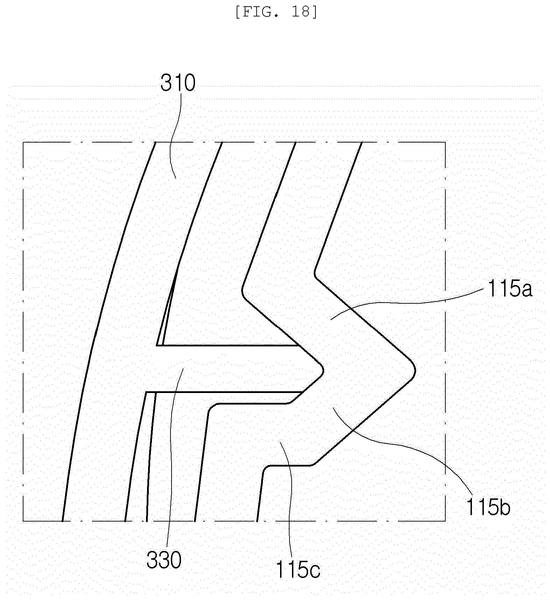

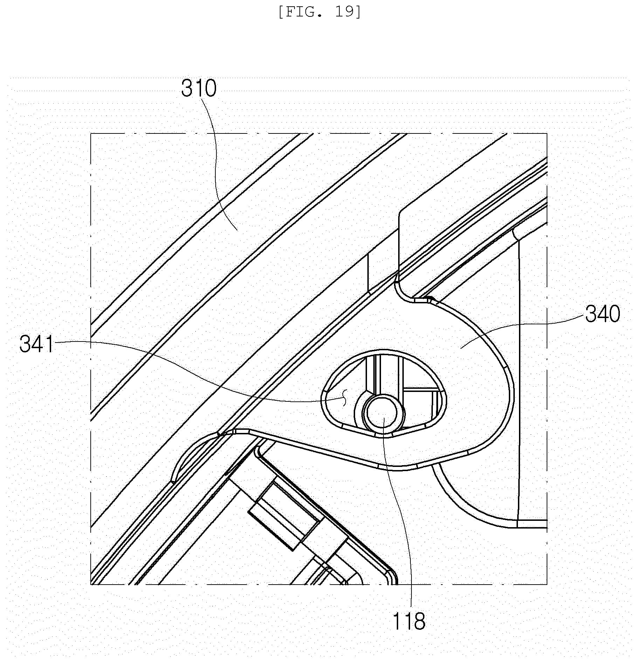

FIGS. 8 and 9 are views showing the top surface of the lower body of the robot cleaner according to an embodiment of the present disclosure, FIGS. 10 to 12 are views showing the bumper unit of the robot cleaner according to an embodiment of the present disclosure, and FIGS. 16 to 19 are views showing the state in which the bumper unit is combined with the body in the robot cleaner according to an embodiment of the present disclosure.

The lower body 110 and the bumper unit 300 of the robot cleaner 1 according to an embodiment of the present disclosure are described hereafter with reference to FIG. 6, FIGS. 8 to 12, and FIGS. 16 to 19.

The upper side of the lower body 110 is coupled to the upper body 105, whereby a space that can accommodate the battery 220, the water tank 230, and the motors 162 and 172 can be provided. Further, the first rotary plate 10, the second rotary plate 20, the first support wheel 120, the second support wheel 130, and the assistant wheel 140 may be coupled to the lower side of the lower body 110.

The bottom surface 112 supposed to fact the floor surface B of a floor may be formed on the lower side of the lower body 110 in the present disclosure. The first rotary plate 10 and the second rotary plate 20 may be rotatably disposed on the bottom surface 112.

The first rotary plate 10 and the second rotary plate 20 may be symmetrically disposed on the bottom surface 112. In detail, a pair of rotary shaft holes 113 may be symmetrically formed through the bottom surface 112.

The rotary shaft 15 of the first rotary plate 10 may be engaged with the first gear 163 of the first actuator 160 through the rotary shaft hole 113. The rotary shaft 25 of the second rotary plate 20 may be engaged with the second gear 173 of the second actuator 170 through the rotary shaft hole 113.

A virtual connection line L1 connecting the rotary shaft 15 of the first rotary plate 10 and the rotary shaft 25 of the second rotary plate 20 may be defined on the lower body 110 in the present disclosure. Since the rotary shaft 15 of the first rotary plate 10 and the rotary shaft 25 of the second rotary plate 20 pass through the rotary shaft holes 113, respectively, the connection line L1 may be a virtual line connecting the rotary shaft holes 113.

The distance C2 between the rotary shaft holes 113 may be larger than two times the radius of the first rotary plate 10 or the second rotary plate 20. According to this configuration, the first rotary plate 10 and the second rotary plate 20 can rotate without interfering with each other.

In the embodiment, the bottom surface 112 may be inclined toward the floor surface B as it goes toward the rotary shaft holes 113 from the middle point between the rotary shaft holes 113. According to this configuration, the first rotary plate 10 and the second rotary plate 20 can more strongly come in contact with the floor at the portion far from each other.

The first support wheel 120 and the second support wheel 130 may be disposed on the bottom surface 112. A batter seat 116 may be formed over the bottom surface 112.

The battery 220 can be accommodated in the battery seat 116. For example, the battery seat 116 may be formed in a shape similar to a rectangular hole so that the battery 220 can be inserted therein. Accordingly, the battery 220 is inserted in the battery seat 116 and then can be fixed to the body 110 by a screw.

The assistant wheel 140 and the assistant wheel body 150 may be coupled to the bottom surface 112. The assistant wheel 140 may be disposed behind the connection line L1 no the bottom surface.

The lower body 110 may have a center line b. In detail, the center line b may be a virtual line that is perpendicular to the connection line L1 at the middle point between the rotary shaft holes 113 and is parallel with the floor surface B.

In the embodiment, the lower body 110 may further have a foreign substance blocking rib. The foreign substance blocking rib may protrude downward from the bottom surface 112 and may be formed along the edges of the first rotary plate 10 and the second rotary plate 20.

For example, the foreign substance blocking rib may be formed circumferentially around the centers of the rotary shaft holes 113.

The distance from the rotary shaft hole 113 to the foreign substance blocking rib may be larger than the radius of the first rotary plate 10 (or the second rotary plate 20) and may be smaller than the radius of the first mop 30 (or the second mop 40.

The foreign substance blocking rib may be spaced apart from the first rotary plat 10 or the second rotary plate 20 with a predetermined gap therebetween. It is preferable that the gap between the foreign substance blocking rib and the first rotary plate 10 or the second rotary plate is as small as possible as long as the foreign substance blocking rib and the first rotary plate 10 or the second rotary plate 20 do not interfere with each other when the first rotary plate 10 or the second rotary plate 20 are rotated.

According to this configuration, it is possible to prevent foreign substances including hair, dust, etc. on a floor from entering the robot cleaner 1 even though the first rotary plate 10 and the second rotary plate 20 are rotated.

Meanwhile, though not shown, the robot cleaner 1 may further have one or more additional foreign substance blocking structure between the rotary shaft holes 113 and the foreign substance blocking rib. According to this configuration, there is an effect that foreign substances are prevented from entering the robot cleaner 1.

A top surface 111 supposed to face the upper body 105 may be formed on the upper side of the lower body 110 in the present disclosure. The motors 162 and 172 may be disposed on the top surface 111.

A border 114 may protrude along the edge of the top surface 111. For example, the protruding border 114 may be circumferentially formed ahead of the connection line L1.

Guide grooves 115 may be formed on the top surface 111. In detail, the guide grooves 115 are connected to the border 114 and can accommodate and support elastic portions 330 of the bumper unit 300 (described below) in contact with the elastic portions 330.

The guide grooves 115 may be formed in a pair ahead of the connection line L1. For example, a virtual line connecting the guide groove 115 and the middle point on the connection line L1 may make an angle of 0 degrees or more and 30 degrees or less with the connection line L1.

The guide grooves 115 each may have a first guide surface 115a, a second guide surface 115b, and a third guide surface 115c.

The first guide surface 115a may be connected with the border 114 and may be inclined at a predetermined angle with respect to the border 114. For example, the first guide surface 115a may extend toward the inside of the body 110 from the border 114 and may make an angle of 30 degrees or more and 60 degrees or less with the border 114. In detail, the first guide surface 115a may be inclined at an angle of 30 degrees or more and 60 degrees or less from a virtual tangential line on the border 114 which passes through a joint of the border 114 and the first guide surface 115a.

The second guide surface 115b may be connected to the first guide surface 115a and may be inclined at a predetermined angle with respect to the first guide surface 115a. For example, the second guide surface 115b may extend toward the outside of the body 110 from the border 114 and may make an angle of 70 degrees or more and 110 degrees or less with the first guide surface 115a.

The third guide surface 115c may be formed to connect the second guide surface 115b and the border 114. According to this configuration, the third guide surface 115c can support the second guide surface 115b.

A sensor seat 117 may be formed on the top surface 111. The first sensor 200 can be accommodated in the sensor seat 117. The sensor seat 117 may be provided in a pair ahead of the connection line L1. For example, a virtual line connecting the sensor seat 117 and the middle point on the connection line L1 may make an angle of 15 degrees or more and 45 degrees or less with the connection line L1. According to this configuration, when shock is applied to the bumper unit 300, the first sensor 200 coupled to the sensor seat 117 can sense the position where the bumper unit 300 hits against an obstacle.

A pole 118 may be coupled to the top surface 111. The pole 118 is formed like a rod and may be erect upward on the top surface 111. The pole 118 may be formed separately from the lower body 110 and then coupled to the lower body 110 or may be integrally formed with the lower body 110. The pole 118 may be provided in a pair ahead of the connection line L1. For example, a virtual line connecting the pole 118 and the middle point on the connection line L1 may make an angle of 45 degrees or more and 75 degrees or less with the connection line L1.

The pole 118 may be inserted in a stopper 340 of the bumper unit 300 to be described below. In detail, the pole 118 may pass through a pole hole 341 of the stopper 340. According to this configuration, even if shock is applied to the bumper unit 300, the movement range of the stopper 340 is limited by the pole 118, so the initial position of the bumper unit 300 can be maintained with respect to the body 100.

A damper holder 119 may be formed on the top surface 111. In detail, the damper holder 119 may protrude upward on the top surface 111. The damper holder 119 may be formed outside the border 114 from the center of the top surface 111. For example, the damper holder 119 may be formed at the front of the top surface 111.

A damper 500 may be coupled to the damper holder 119. In detail, the damper holder 119 may be inserted in the damper 500. That is, the damper holder 119 may protrude in a column shape from the top surface 111 to be able to be inserted in the damper 500. For example, the damper holder 119 may be formed in a rectangular column shape in a pair.

The bumper unit 300 is coupled to the edge of the body 100 and moves with respect to the body 100. For example, the bumper unit 300 may be combined with the body 100 to be able to reciprocate toward and away from the center of the body 100.

The bumper unit 300 may be coupled to a portion of the edge of the body 100 or may be coupled to the entire edge of the body 100.

The bumper unit 300 may have a bumper 310, a cam 320, an elastic portion 330, a stopper 340, a blocker protrusion 350, a guide rib 360, and a damper contact portion 370.

The bumper 310 may be configured to be able to move with respect to the body 100. For example, the bumper 310 may be formed in an arc shape having a predetermined thickness and a predetermined height to be able to cover at least a portion of the border 114 of the body 100.

The bumper 310 may be disposed at a predetermined distance from the border 114. A plate spring 400 and the damper 500 to be described below may be disposed between the bumper 310 and the border 114. According to this configuration, when the robot cleaner 1 hits against an obstacle, etc., the bumper 310 can distribute the shock by moving, thereby being able to prevent shock from being directly applied to the body 100.

The cam 320 may protrude at a predetermined angle from the bumper 310. In detail, the cam 320 protrudes from the inner surface of the arc-shaped bumper 310 and may have an inclined surface 321 with which the sensing portion 210 of the first sensor 200 can come in contact. For example, the inclined surface 321 may protrude at a predetermined angle from the inner surface of the bumper 310. Alternately, the inclined surface 321 may be a surface connected to the inner surface of the bumper 310 and protruding with a predetermined curvature.

According to this configuration, when the bumper 310 moves with respect to the body 100, the inclined surface 321 can press the sensing portion 210 of the first sensor 200 while moving with the bumper 310. Accordingly, the first sensor 200 can sense that the bumper 310 has come in contact with an obstacle, etc.

The cam 320 may be provided in a pair and disposed ahead of the connection line L1 when the bumper unit 300 is coupled to the body 100. The cam 320 may be formed at a position corresponding to the first sensor 200. For example, a virtual line connecting the cam 320 and the middle point on the connection line L1 may make an angle of 15 degrees or more and 45 degrees or less with the connection line L1.

According to this configuration, the first sensor 200 can sense relative movement of the bumper unit 300 in as wide range as possible and can sense an approximate position where the bumper 310 has come in contact with an obstacle, etc.

For example, when a side (in the direction crossing the direction of forward movement or backward movement) of the robot cleaner 1 comes in contact with an obstacle, etc., only the first sensor 200 close to the obstacle can sense movement of the bumper 300. When the front (in the direction of forward movement) of the robot cleaner 1 comes in contact with an obstacle, etc., the pair of first sensors 200 can sense movement of the bumper unit 300. Accordingly, the controller 180 can move backward or turn the robot cleaner 1 by rotating the first rotary plate 10 and the second rotary plate 20 so that the robot cleaner 1 avoids the obstacle, etc.

The elastic portion 330 protrudes from the bumper 310 and can elastically support the body 100. In detail, the elastic portion 330 may protrude in a plate shape from the inner surface of the arc-shaped bumper 310. The elastic portion 330 may protrude at a predetermined angle from the inner surface of the bumper 310. For example, the elastic portion 330 may protrude in parallel with the connection line L1 with the bumper unit 300 coupled to the body 100.

The bumper 330 may be provided in a pair and disposed ahead of the connection line L1 when the bumper unit 300 is coupled to the body 100. The elastic portion 330 may be formed at a position corresponding to the guide groove 115. For example, a virtual line connecting the elastic portion 330 and the middle point on the connection line L1 may make an angle of 0 degrees or more and 30 degrees or less with the connection line L1.

The elastic member 330 is inserted in the guide groove 115 and can support the bumper 310 in contact with the bumper 310. In detail, the elastic portion 330 can elastically support the bumper 310 in contact with the first guide surface 115a and the second guide surface 115b.

According to this configuration, when the bumper 310 moves with respect to the body 100, the elastic portion 330 can be elastically deformed in contact with the first guide surface 115a or the second guide surface 115b. The bumper 310 can be returned to the initial position by the restoring force of the elastic portion 330.

For example, when the front of the robot cleaner 1 comes in contact with an obstacle, etc. and the bumper 310 moves toward the body 100, the elastic portion 330 is deformed by coming in contact with the second guide surface 115b and the bumper 310 is returned to the initial position by the restoring force of the elastic portion 330, whereby the gap between the bumper 310 and the body 100 can be maintained.

The stopper 340 protrudes from the bumper 310 and can limit the movement range of the bumper 310. For example, the stopper 340 may protrude from the inner surface of the arc-shaped bumper 310 in a plate shape similar to a fan shape.

A pole hole 341 may be formed at the center of the stopper 340. For example, the pole hole 341 may be a circular hole formed in the stopper 340.

The stopper 340 may be provided in a pair and disposed ahead of the connection line L1 when the bumper unit 300 is coupled to the body 100. The stopper 340 may be formed at a position corresponding to the pole 118. For example, a virtual line connecting the stopper 340 and the middle point on the connection line L1 may make an angle of 45 degrees or more and 75 degrees or less with the connection line L1.

The pole hole 341 can accommodate the pole 118 therein and can limit the movement range of the pole 118.

For example, when the bumper unit 300 is coupled to the body 100, the pole 118 passes through the pole hole 341 and is positioned at the center of the pole hole 341. In this state, when the robot cleaner 1 comes in contact with an obstacle, etc. and the bumper unit 300 moves with respect to the body 100, the stopper 340 is also moved with the bumper 310 and the pole 118 comes out of the center of the pole hole 341. In this case, even if the movement distance of the bumper 310 becomes larger than the radius of the pole hole 341, the pole 118 is stopped and no longer moved by the stopper 340. Therefore, according to the present disclosure, the movement range of the bumper 310 can be limited by the pole 118 and the stopper 340.

When contact with an obstacle, etc. which has moved the bumper unit 300 is removed and the bumper 310 is returned to the initial position by the restoring force of the elastic portion 330 and/or the plate spring 400, the pole 118 can also be returned to the center of the pole hole 341. If the pole 118 is not positioned at the center of the pole hole 341, a user can find out there are errors in the positions of the bumper unit 300 and the body 100 and can correct the errors. Therefore, according to the present disclosure, it is possible to find out the exact positions of the bumper unit 300 and the body 100 from the position of the pole 118, and if necessary, it is possible to correct coupling or the position of the bumper unit 300.

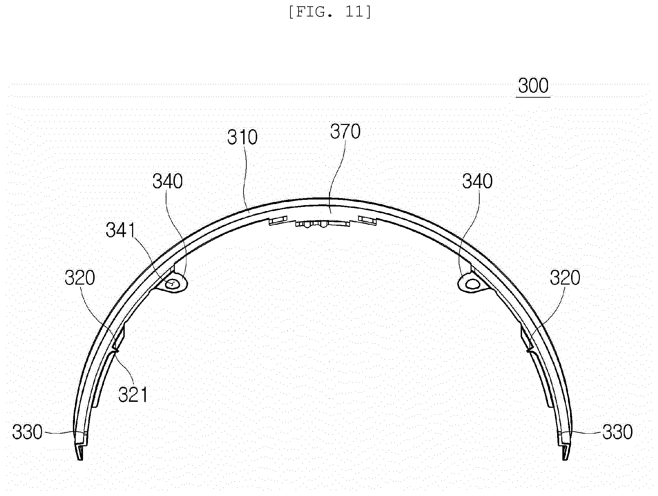

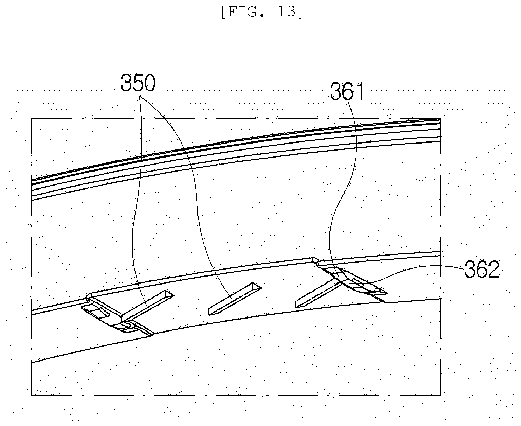

FIG. 13 is a partial enlarged view of blocker protrusions and guide ribs shown in FIG. 11.

The blocker protrusion 350 may protrude from the bottom surface of the bumper 310. For example, the blocker protrusion 350 may protrude like a rib (or a blade) from the bottom surface of the bumper 310. The blocker protrusion 350 may be formed as a plurality of pieces (or blades) with predetermined intervals.

According to this configuration, the blocker protrusions 350 can move the bumper 310 by generating friction with a surface to be cleaned, depending on the material of the surface to be cleaned (the floor surface B). For example, when a surface to be cleaned is covered with a soft material such as a carpet and a rug, the blocker protrusions 350 can generate friction with the surface to be cleaned. In this case, the bumper 310 can be pulled toward the body 100 by the friction applied to the blocker protrusions 350. That is, when friction is applied to the blocker protrusions 350, the bumper 310 can move with respect to the body 100. Accordingly, the controller 180 can recognize the surface to be cleaned cover with a carpet, a rug, etc. as an obstacle, and can control the robot cleaner 1 to go backward or turn by changing the rotational direction of the first rotary plate 10 or the second rotary plate 20 so that the robot cleaner 1 avoids the surface to be cleaned.

The blocker protrusions 350 may be formed between a pair of guide ribs 360. The guide ribs 360 protrude from the bottom surface of the bumper 310 and can guide the robot cleaner 1 such that the bottom surface of the bumper 310 can go across a threshold, etc., without being blocked by the threshold, etc. when the robot cleaner 1 goes across the threshold, etc.

The guide rib 360 may have a rising surface 361 and a passing surface 362. The rising surface 361 may protrude at a predetermined angle from the bottom surface of the bumper 310. The rising surface 361 may protrude such that the outer portion of the bottom surface of the bumper 310 is far from the ground and gradually gets close to the floor surface B.

The passing surface 362 is connected to the rising surface 361 and at least a portion of the passing surface 362 may be formed in a surface shape parallel with the floor surface B.

The passing surface 362 may protrude closer to the floor surface B than the blocker protrusion 350. According to this configuration, it is possible to prevent the blocker protrusions 350 from being pulled by coming in contact with a threshold, etc. when the robot cleaner 1 goes across the threshold, etc. Accordingly, there is an effect that it is possible to prevent the controller 180 from recognizing the threshold as an obstacle when the bumper 310 is pulled.

The guide ribs 360 may be formed in the direction of straight movement of the robot cleaner 1. According to this configuration, when the robot cleaner 1 goes straight and approaches a threshold, etc., the robot cleaner 1 can easily go across the threshold, etc.

The bottom surface of the bumper 310 in the ranges where the blocker protrusions 350 are formed may be farther from the floor surface B than the other bottom surface of the bumper 310 outside the guide ribs 360. According to this configuration, the protruding height of blocker protrusions 350 may increase, so the friction on a surface to be cleaned may increase.

Assuming the blocker protrusions 350 formed between a pair of guide ribs 360 are one set (hereafter, which may be referred to as a bumper bottom surface protrusion structure') a plurality of sets of blocker protrusions 350 and guide ribs 360 may be formed. For example, five bumper bottom surface protrusion structures may be formed with predetermined intervals on the bottom surface of the bumper 310. According to this configuration, it is possible to prevent the robot cleaner 1 from entering a surface to be cleaned covered with a carpet, a rug, etc. while going straight and it is also possible to prevent the robot cleaner 1 from entering a surface to be cleaned covered with a carpet, a rug, etc. while turning.

The damper contact portion 370 may protrude from the inner surface of the bumper 310. In detail, the damper contact portion 370 may protrude a predetermined length from the inner surface of the bumper 310, thereby being able to come in contact with the damper 500 to be described below. According to this configuration, when shock (external force) is applied to the bumper 310, the damper contact portion 370 moves with the bumper 310, thereby being able to transmit the shock to the damper 500.

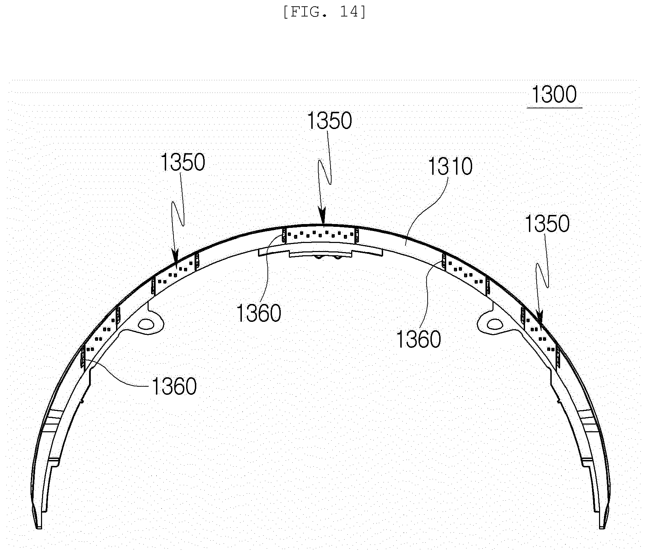

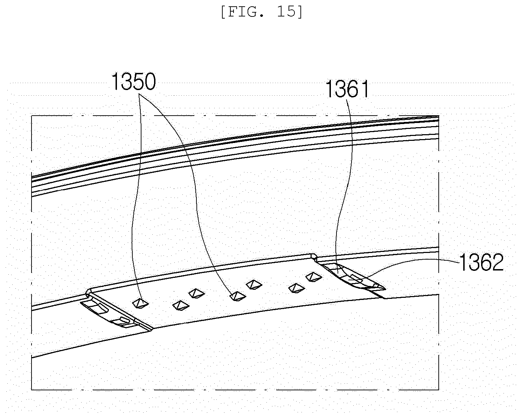

FIGS. 14 and 15 show another embodiment of the blocker protrusions.

The shape of blocker protrusions 1350 according to another embodiment of the present disclosure is described hereafter with reference to FIGS. 14 and 15.

Since other configurations excepting the blocker protrusions 1350 in this embodiment are the same as those of the robot cleaner according to an embodiment of the present disclosure, the configurations can be referred.

The blocker protrusions 1350 of this embodiment may be formed in a shape similar to a triangular prism. In this case, it is possible to form several protruding structures in the same area in comparison to the blocker protrusions 350 having a rib shape (or a blade shape) in an embodiment of the present disclosure. Accordingly, it is possible to increase the possibility of the blocker protrusions 1350 being blocked by a carpet, a rug, or the like placed on a surface to be cleaned and it is possible to increase the possibility of the controller 180 recognizing it as an obstacle.

The blocker protrusions 1350 may be arranged in a zigzag pattern in this embodiment. According to this arrangement, it is possible to increase the possibility of the blocker protrusions 1350 being blocked by a carpet, a rug, or the like placed on a surface to be cleaned and it is possible to increase the possibility of the controller 180 recognizing it as an obstacle.

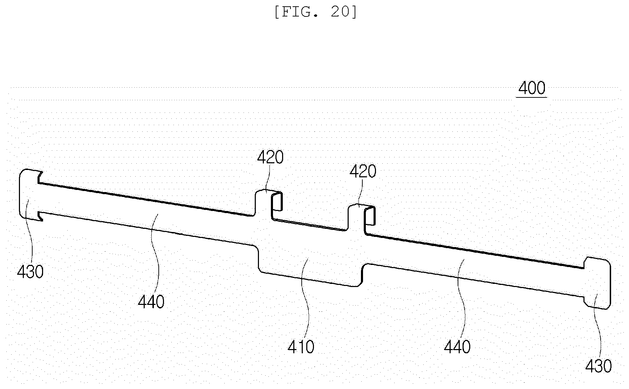

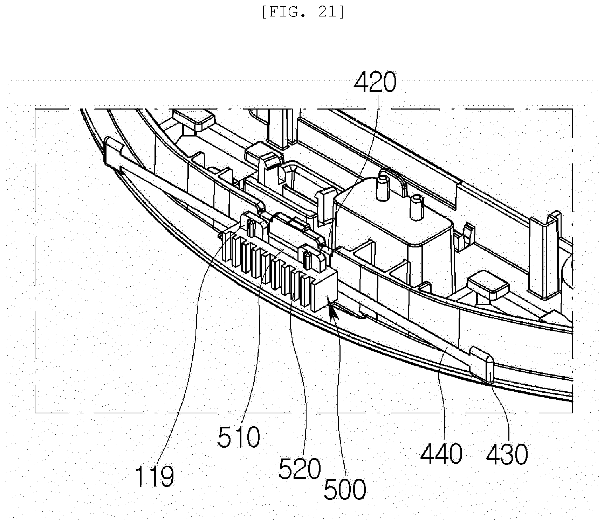

FIG. 20 is a perspective view showing a plate spring of the robot cleaner according to an embodiment of the present disclosure and FIG. 21 is a view showing the state in which the plate spring and the damper have been combined with the body of the robot cleaner according to an embodiment of the present disclosure.

The plate spring 400 and the damper 500 of the robot cleaner 1 according to an embodiment of the present disclosure are described hereafter with reference to FIGS. 20 and 21.

The plate spring 400 is disposed between the bumper 310 and the body 100 and can apply a restoring force to the bumper 310 when the bumper 310 moves with respect to the body 100.

The plate spring 400 may have a plate spring body 410, body coupling portions 420, bumper contact portions 430, and extensions 440.

The plate spring 400 may be made of an elastic material in a flat plate shape. The lower end of the plate spring 400 may be supported on the top surface 111 and the upper end thereof may be connected to the body coupling portions 420. Both horizontal ends of the plate spring 400 may be connected with the extensions 440.

The body coupling portions 420 may extend perpendicular to the ground from the plate spring body 410. In detail, the body coupling portion 420 may extend perpendicular to the ground from the plate spring body 410, bend to the inside of the lower body 110, and then extend downward. According to this configuration, the body coupling portions 420 may be coupled to the border 114. That is, the body coupling portions 420 may be held on the upper end of the border 114. When grooves are formed on the border 114 to guide the coupling positions of the body coupling portions 420, the coupling force between the border 114 and the body coupling portions 420 can be increased.

The bumper contact portion 430 extends in parallel with the ground from the plate spring body 410 and can be supported on the bumper 310. That is, the extensions 440 extend in parallel with the ground from the plate spring body 410 and the bumper contact portions 430 may be formed at the ends in the extension direction of the extensions 440. The bumper contact portion 430 may be formed at positions that come in contact with the bumper 310. According to this configuration, when the bumper 310 moves with respect to the body 100, the shock (external force) applied to the bumper 310 can be transmitted to a bumper contact portion 430. Further, the shock (external force) transmitted to the bumper contact portion 430 can be transmitted to the plate spring body 410 and the bumper contact portion 430 at the opposite end. Accordingly, the shock applied to the bumper 310 can be distributed through the plate spring 400.

The damper 500 is disposed between the bumper 310 and the border 114 of the body 100 and can come in contact with the bumper the bumper 300 moves with respect to the body 100. In detail, the damper 500 is disposed between the plate spring body 410 and the bumper 310 and can come in contact with the damper contact portion 370.

The damper 500 may be formed in a shape similar to a cuboid and may have a hole at the center to be coupled to the damper holder 119. For example, the hole of the damper 500 may be formed in a rectangular shape and the damper holder 119 may be disposed through the hole.

The damper 500 may be made of a material that can be elastically deformed. According to this configuration, when shock (external force) is applied to the bumper 310, the bumper 310 moves toward the body 100 and presses the damper 500. In this case, the damper 500 can absorb the shock applied to the bumper 310 while elastically deforming.

A plurality of grooves may be vertically formed on the outer surface (facing the bumper 310) of the damper 500. According to this configuration, the amount of elastic deformation of the damper 500 can be increased and the shock absorption amount of the bumper 310 can be increased.

Although the present disclosure was described in detail with reference to detailed embodiments, the embodiments are provided only to describe the present disclosure in detail and the present disclosure is not limited to the embodiments. Further, it is apparent that the present disclosure may be changed and improved by those skilled in the art without departing from the spirit of the present disclosure.

Simple changes and modifications of the present invention are included in the range of the present invention and the detailed protection range of the present invention will be made clear by claims.

## Claims

1. A robot cleaner comprising:
a body having an internal space for accommodating a battery, a water tank, and a motor;
a first rotary plate having a lower side to which a first mop facing a floor surface is coupled, the first rotary plate being rotatably disposed on a bottom surface of the body;
a second rotary plate having a lower side to which a second mop facing the floor surface is coupled, the second rotary plate being rotatably disposed on the bottom surface of the body;
a bumper unit coupled to a border of the body; and
a first sensor disposed in the body and sensing movement of the bumper unit relative to the body,
wherein the bumper unit comprises a bumper able to move with respect to the body, and a cam protruding at a predetermined angle from the bumper;
the cam comprises an inclined surface formed at a predetermined angle from the bumper; and
the inclined surface is in contact with the first sensor and presses the first sensor while moving with the bumper when the bumper moves with respect to the body.

2. The robot cleaner of claim 1, wherein the bumper unit further comprises an elastic portion protruding from the bumper and elastically supporting the body.

3. The robot cleaner of claim 2, wherein the body comprises a guide groove accommodating the elastic portion and supporting the elastic portion in contact with the elastic portion.

4. The robot cleaner of claim 3, wherein the guide groove comprises:
a first guide surface connected to the border of the body and inclined at a predetermined angle with respect to the border; and
a second guide surface connected to the first guide surface and inclined at a predetermined angle with respect to the first guide surface.

5. The robot cleaner of claim 1, wherein the bumper unit further comprises a stopper protruding from the bumper and limiting a movement range of the bumper.

6. The robot cleaner of claim 5, wherein the body comprises a pole passing through the stopper, and
the stopper comprises a pole hole accommodating the pole therein and limiting a movement range of the pole.

7. The robot cleaner of claim 1, further comprising:
a plate spring disposed between the bumper and the body and applying a restoring force to the bumper when the bumper moves with respect to the body.

8. The robot cleaner of claim 7, wherein the plate spring comprises:
a plate spring body;
a body coupling portion extending perpendicular to the ground from the plate spring body, and coupled to the body; and
a bumper contact portion extending in parallel with the ground from the plate spring body and being in contact with the bumper.

9. The robot cleaner of claim 1, further comprising:
a damper disposed between the bumper and the body and coming in contact with the bumper when the bumper moves with respect to the body.

10. The robot cleaner of claim 8, further comprising:
a damper disposed between the bumper and the body and coming in contact with the bumper when the bumper moves with respect to the body,
wherein the damper is disposed between the plate spring body and the bumper.

11. A robot cleaner comprising:
a body having an internal space for accommodating a battery, a water tank, and a motor;
a first rotary plate having a lower side to which a first mop facing a floor surface is coupled, the first rotary plate being rotatably disposed on a bottom surface of the body;
a second rotary plate having a lower side to which a second mop facing the floor surface is coupled, the second rotary plate being rotatably disposed on the bottom surface of the body;
a bumper unit coupled to an edge of the body; and
a first sensor disposed on a bottom surface of the body and sensing movement of the bumper unit relative to the body,
wherein the bumper unit comprises:
a bumper able to move with respect to the body; and
a blocker protrusion protruding from a bottom surface of the bumper.

12. The robot cleaner of claim 11, wherein the bumper unit further comprises a guide rib having a rising surface protruding at a predetermined angle from the bottom surface of the bumper.

13. The robot cleaner of claim 12, wherein the guide rib comprises a passing surface connected to the rising surface and positioned closer to a floor surface than the blocker protrusion.

14. The robot cleaner of claim 11, wherein when friction is applied to the blocker protrusion, the bumper moves with respect to the body.

15. The robot cleaner of claim 11, wherein when friction is applied to the blocker protrusion, a rotational direction of the first rotary plate or the second rotary plate is changed.
